# EUROPEAN PATENT APPLICATION

(11) **EP 4 542 917 A1**
(43) Date of publication of application: **23.04.2025**
(21) Application number: 23829744.4
(22) Date of filing: 12.05.2023
(51) Int. Cl.: H04L 9/00

(54) **DATA PROCESSING METHOD AND DEVICE, AND COMPUTER DEVICE AND READABLE STORAGE MEDIUM**

(30) Priority: 29.06.2022 CN 202210749088
(71) Applicant: ZTE Corporation, Shenzhen, Guangdong 518057 (CN)
(72) Inventor: GUO, Tian, Shenzhen, Guangdong 518057 (CN)
(74) Representative: Savi, Massimiliano
(86) International application number: PCT/CN2023/093893
(87) International publication number: WO 2024/001558

(57) **Abstract**

Provided in the present application are a data processing method and device, and a computer device and a readable storage medium. The method comprises: acquiring a service algorithm of an application service, and performing format conversion on the service algorithm, so as to obtain an algebraic intermediate representation (S110); processing the algebraic intermediate representation according to a preset scalable transparent argument of knowledge (STARK) conversion rule, so as to obtain a prover and a verifier (S120); sending the prover to a computing power processing device (S130); receiving an operation result, which is sent by the computing power processing device, wherein proof information in the operation result and a ciphertext result in same are obtained by the computing power processing device performing, by using the prover, calculation on ciphertext data, which is obtained by a data source device by using a homomorphic encryption algorithm (S140); and when the proof information passes verification, sending the ciphertext result to the data source device, such that the data source device decrypts the ciphertext result by using the homomorphic encryption algorithm, and returns a plaintext result (S150).

## Description

### CROSS-REFERENCE TO RELATED APPLICATION

This application is filed on the basis of Chinese patent application No. 202210749088.1 filed June 29, 2022, and claims priority to the Chinese patent application, the entire contents of which are incorporated herein by reference.

### TECHNICAL FIELD

The present disclosure relates to the technical field of network security, and more particularly, to a data processing method and device, a computer device, and a readable storage medium.

### BACKGROUND

Cloud platform systems have been widely used. With the reflection on the shortcomings of existing system architectures and the continuous development of upper-layer service models, conventional centralized processing architectures and distributed processing architectures can no longer meet the needs. Some new improvement requirements are proposed for underlying cloud platform and data processing architectures. At present, an upper-layer application system based on a cloud platform adopts a hybrid processing architecture. In the hybrid processing architecture, service algorithm design and algorithm processing are executed separately. Processing of service control is centralized, while processing of service data is distributed. Such an architecture is superior to conventional centralized processing architectures and distributed processing architectures in terms of resource utilization and scalability, but cannot ensure computational integrity and data integrity.

### SUMMARY

The present disclosure provides a data processing method and device, a computer device, and a readable storage medium.

The following technical schemes are adopted in embodiments of the present disclosure.

In accordance with a first aspect of the present disclosure, an embodiment provides a data processing method, applied to a data application device, the method including: acquiring a service algorithm of an application service, and performing format conversion on the service algorithm to obtain an algebraic intermediate representation; processing the algebraic intermediate representation according to a preset Scalable Transparent ARgument of Knowledge (STARK) conversion rule to obtain a prover and a verifier; sending the prover to a computing power processing device; receiving an operation result sent by the computing power processing device, where the operation result includes proof information and a ciphertext result, the proof information and the ciphertext result are obtained by the computing power processing device through calculation on ciphertext data using the prover, and the ciphertext data is obtained by a data source device using a homomorphic encryption algorithm; and performing a verification on the proof information using the verifier, and sending the ciphertext result to the data source device in response to the verification of the proof information being successful, such that the data source device decrypts the ciphertext result using the homomorphic encryption algorithm and returns a plaintext result.

In accordance with a second aspect of the present disclosure, an embodiment provides a data processing method, applied to a computing power processing device, the method including: receiving a prover sent by a data application device; acquiring, from a data source device, ciphertext data obtained using a homomorphic encryption algorithm, and performing calculation on the ciphertext data through the prover to obtain proof information and a ciphertext result; and sending the proof information and the ciphertext result to the data application device, such that the data application device obtains a plaintext result according to the proof information and the ciphertext result.

In accordance with a third aspect of the present disclosure, an embodiment provides a data processing method, applied to a data source device, the method including: encrypting plaintext data of an application service using a homomorphic encryption algorithm to obtain ciphertext data; sending the ciphertext data to a computing power processing device, such that the computing power processing device performs calculation on the ciphertext data using a prover to obtain proof information and a ciphertext result, and sends the proof information and the ciphertext result to a data application device; receiving a decryption request sent by the data application device, where the decryption request indicates that the proof information passes a verification by a verifier deployed on the data application device and carries the ciphertext result; decrypting the ciphertext result using the homomorphic encryption algorithm to obtain a plaintext result; and sending the plaintext result to the data application device.

In accordance with a fourth aspect of the present disclosure, an embodiment provides a data processing device, including: a first acquisition module, configured for acquiring a service algorithm of an application service, and performing format conversion on the service algorithm to obtain an algebraic intermediate representation; a first processing module, configured for processing the algebraic intermediate representation according to a preset STARK conversion rule to obtain a prover and a verifier; a first sending module, configured for sending the prover to a computing power processing device; a first receiving module, configured for receiving an operation result sent by the computing power processing device, where the operation result includes proof information and a ciphertext result, the proof information and the ciphertext result are obtained by the computing power processing device through calculation on ciphertext data using the prover, and the ciphertext data is obtained by a data source device using a homomorphic encryption algorithm; an information verification module, configured for performing a verification on the proof information using the verifier; and a second processing module, configured for sending the ciphertext result to the data source device in response to the verification of the proof information being successful, such that the data source device decrypts the ciphertext result using the homomorphic encryption algorithm and returns a plaintext result.

In accordance with a fifth aspect of the present disclosure, an embodiment provides a data processing device, including: a second receiving module, configured for receiving a prover sent by a data application device; a second acquisition module, configured for acquiring, from a data source device, ciphertext data obtained using a homomorphic encryption algorithm; a third processing module, configured for performing calculation on the ciphertext data through the prover to obtain proof information and a ciphertext result; and a third sending module, configured for sending the proof information and the ciphertext result to the data application device, such that the data application device obtains a plaintext result according to the proof information and the ciphertext result.

In accordance with a sixth aspect of the present disclosure, an embodiment provides a data processing device, including: a data encryption module, configured for encrypting plaintext data of an application service using a homomorphic encryption algorithm to obtain ciphertext data; a fourth sending module, configured for sending the ciphertext data to a computing power processing device, such that the computing power processing device performs calculation on the ciphertext data using a prover to obtain proof information and a ciphertext result, and sends the proof information and the ciphertext result to a data application device; a third receiving module, configured for receiving a decryption request sent by the data application device, where the decryption request indicates that the proof information passes a verification by a verifier deployed on the data application device and carries the ciphertext result; a data decryption module, configured for decrypting the ciphertext result using the homomorphic encryption algorithm to obtain a plaintext result; and a fifth sending module, configured for sending the plaintext result to the data application device.

In accordance with a seventh aspect of the present disclosure, an embodiment provides a computer device, including a memory and a processor, where the memory stores computer-readable instructions which, when executed by the processor, cause the processor to perform the steps of the method in accordance with any one of the first aspect, the second aspect, and the third aspect.

In accordance with an eighth aspect of the present disclosure, an embodiment provides a computer-readable storage medium, readable and writable by a processor and storing computer-readable instructions, where the computer-readable instructions, when executed by the processor, cause the processor to perform the steps of the method in accordance with any one of the first aspect, the second aspect, and the third aspect.

### BRIEF DESCRIPTION OF DRAWINGS

FIG. 1 is a schematic structural diagram of a data processing device according to an embodiment of the present disclosure;
FIG. 2 is a schematic structural diagram of a data processing device according to another embodiment of the present disclosure;
FIG. 3 is a schematic flowchart of a data processing method according to an embodiment of the present disclosure;
FIG. 4 is a schematic flowchart of a data processing method according to another embodiment of the present disclosure;
FIG. 5 is a schematic flowchart of a data processing method according to another embodiment of the present disclosure;
FIG. 6 is a schematic flowchart of a data processing method according to another embodiment of the present disclosure;
FIG. 7 is a schematic flowchart of a data processing method according to another embodiment of the present disclosure;
FIG. 8 is a schematic flowchart of a data processing method according to another embodiment of the present disclosure;
FIG. 9 is a schematic flowchart of a data processing method according to another embodiment of the present disclosure;
FIG. 10 is a schematic flowchart of a data processing method according to another embodiment of the present disclosure;
FIG. 11 is a schematic flowchart of a data processing method according to another embodiment of the present disclosure;
FIG. 12 is a schematic detailed flowchart of S390 in FIG. 11;
FIG. 13 is a schematic structural diagram of data processing in some cases;
FIG. 14 is a schematic overall flowchart of operation result verification in a data processing method according to an embodiment of the present disclosure;
FIG. 15 is a schematic overall flowchart of prover deployment in a data processing method according to an embodiment of the present disclosure;
FIG. 16 is a schematic overall flowchart of data encryption processing in a data processing method according to an embodiment of the present disclosure;
FIG. 17 is a schematic overall flowchart of data decryption processing in a data processing method according to an embodiment of the present disclosure; and
FIG. 18 is a schematic structural diagram of a device according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the embodiments described herein are merely used for illustrating the present disclosure, and are not intended to limit the present disclosure.

It should be noted that although logical orders have been shown in the flowcharts, in some cases, the steps shown or described may be performed in an order different from the orders as shown in the flowcharts. In the description, claims, or accompanying drawings, the terms "first", "second", "third", "fourth", "fifth" or the like are used to distinguish between similar objects, and are not necessarily used to describe a specific sequence or a precedence order.

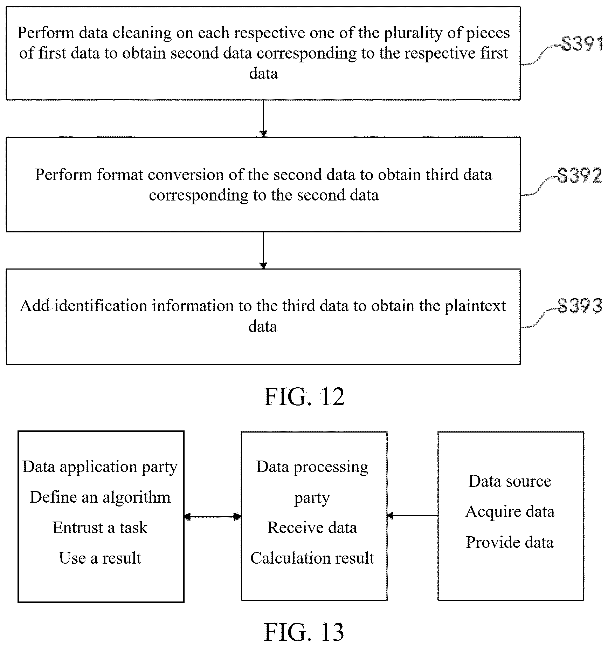

In related technologies, the use of a hybrid processing architecture can make full use of hardware computing resources to avoid the waste of idle hardware resources, reduces the complexity of upper-layer applications, and improves compatibility. Referring to FIG. 13, in a hybrid processing architecture, a data application party entrusts an algorithm to a data processing party. After acquiring data from a data source, the data processing party performs calculation on the data using the entrusted algorithm, and returns a result of the calculation to the data application party. Such an architecture has the advantages of making full use of existing hardware computing resources, reducing the complexity of upper-layer applications, and improving compatibility. However, no scheme has been provided in related technologies regarding how the data application party determines that data processing party can faithfully execute the entrusted algorithm, how to determine that the algorithm process has not been tampered with, and how to determine that intermediate and final results of calculations have not been tampered with. Because the data application party does not have direct access to the data source, data privacy can be ensured to a certain extent, but it cannot be found whether input data of the algorithm has been tampered with. Therefore, the above process cannot ensure computational integrity and data integrity. For the above problems, many people may think that if the management party behind the data processing party is trusted and vendors and operation and maintenance parties of all software and hardware are trusted, there will be no chance for the data processing party to damage computational integrity or data integrity. However, the credibility of the data processing party cannot be ensured in practice, because mature software and hardware that are widely used are often found to have various flaws and backdoors. Therefore, how to ensure computational integrity and data integrity in the hybrid processing architecture is an urgent problem to be solved.

In view of the above, the embodiments of the present disclosure provide a data processing method and device, a computer device, and a readable storage medium. The method is applied to a data application device 100. In the method, the data application device 100 acquires a service algorithm of an application service, and performs format conversion on the service algorithm to obtain an algebraic intermediate representation. After performing conversion processing on the service algorithm, the data application device 100 processes the algebraic intermediate representation according to a preset STARK conversion rule to obtain a prover and a verifier. The data application device 100 sends the prover to a computing power processing device 200, to facilitate the deployment of the prover by the computing power processing device 200. The data application device 100 receives an operation result sent by the computing power processing device 200, where the operation result includes proof information and a ciphertext result, the proof information and the ciphertext result are obtained by the computing power processing device 200 through calculation on ciphertext data using the prover, and the ciphertext data is obtained by a data source device 300 using a homomorphic encryption algorithm. In this way, the ciphertext result can be received, thereby ensuring data privacy. Because the verifier is deployed on the data application device 100, the deployed verifier can be used to perform a verification on the proof information to determine whether the operation result sent by the computing power processing device 200 has been tampered with. If the verification of the proof information is successful, it indicates that the algorithm operations have not been tampered with at the time of calculation, such that computational integrity is ensured. The data application device 100 sends the ciphertext result to the data source device 300, such that the data source device 300 decrypts the ciphertext result using the homomorphic encryption algorithm and returns a plaintext result. This ensures data integrity and facilitates the subsequent use of the plaintext result. The present disclosure can ensure computational integrity and data integrity while achieving high resource utilization and scalability.

The embodiments of the present disclosure will be further described in detail below in conjunction with the accompanying drawings.

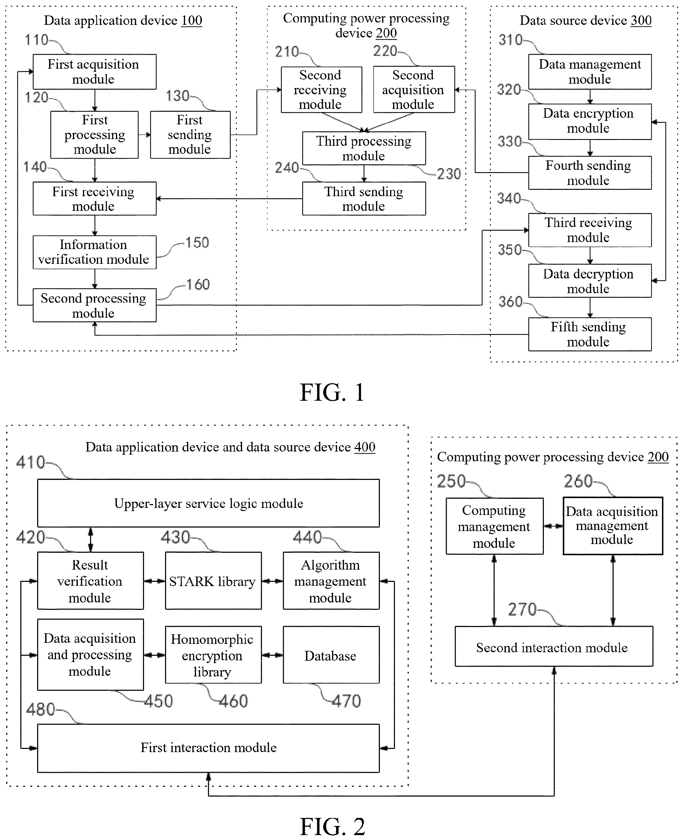

FIG. 1 is a schematic structural diagram of a data processing device according to an embodiment of the present disclosure. In the embodiment shown in FIG. 1, data interaction is performed among a data application device 100, a computing power processing device 200, and a data source device 300 in the data processing device to ensure the high efficiency, integrity, and privacy protection of the data processing process.

As shown in FIG. 1, the data application device 100 includes a first acquisition module 110, a first processing module 120, a first sending module 130, a first receiving module 140, an information verification module 150, and a second processing module 160. The first acquisition module 110 is configured for acquiring a service algorithm of an application service, and performing format conversion on the service algorithm to obtain an algebraic intermediate representation. The first processing module 120 is configured for processing the algebraic intermediate representation according to a preset STARK conversion rule to obtain a prover and a verifier. This facilitates the subsequent deployment of the prover and the verifier. The first sending module 130 is configured for sending the prover to the computing power processing device 200 for deployment by the computing power processing device 200. The first receiving module 140 is configured for receiving an operation result sent by the computing power processing device 200, where the operation result includes proof information and a ciphertext result, the proof information and the ciphertext result are obtained by the computing power processing device 200 through calculation on ciphertext data using the prover, and the ciphertext data is obtained by a data source device 300 using a homomorphic encryption algorithm. The outsourcing of computing power allows for making full use of hardware resources, thereby improving the execution efficiency. The information verification module 150 is configured for performing a verification on the proof information using the verifier. This ensures computational integrity. The second processing module 160 is configured for sending the ciphertext result to the data source device 300 when the verification of the proof information is successful, such that the data source device 300 decrypts the ciphertext result using the homomorphic encryption algorithm and returns a plaintext result. Because the plaintext result is obtained from the ciphertext result, data integrity can be ensured. The present disclosure can ensure computational integrity and data integrity while achieving high resource utilization and scalability.

In an embodiment, the first acquisition module 110 is connected to the first processing module 120, the first processing module 120 is respectively connected to the first sending module 130 and the first receiving module 140, the first receiving module 140 is connected to the information verification module 150, the information verification module 150 is connected to the second processing module 160, and the second processing module 160 is connected to the first acquisition module 110. The first acquisition module 110 is a module that acquires a service requirement, defines a service algorithm, converts the service algorithm, provides the converted service algorithm to the first processing module 120, and performs subsequent processing in the service procedure using a final calculation result. The first processing module 120 is a STARK converter for generating the prover and the verifier. The first sending module 130 is an algorithmic program distribution module. The first receiving module 140 is an interaction module for receiving data from the data source device 300. The second processing module 160 is a module capable of performing a verification on the returned plaintext result and sending the plaintext result that passes the verification to the first acquisition module 110 for use by an upper-layer service application.

In an embodiment, STARK is a mathematical proof system that uses techniques such as arithmetization, polynomial constraints, and interactive oracle proofs to transform a series of computational steps (including intermediate results and final results) into a probabilistically verifiable proof. After obtaining the proof, the verifier can verify whether the proof is true or false with a very small computational cost and a very high correctness percentage. If the proof is false, it indicates that the prover has not strictly executed all the calculation logic (or a calculation result has been tampered with). If the proof is true, it indicates that the prover has strictly executed all the calculation logic, and that contents of the input, intermediate output, and final output match. Even if there is a backdoor in the environment in which the computing power processing device 200 is located or the computing power processing device 200 is controlled by a malicious attacker, the proof and the result generated by the computing power processing device 200 will pass the verification by the verifier and be accepted, as long as the computing power processing device 200 follows a data processing logic agreed on and does not tamper with the intermediate and final results generated by the operation. Once there is any tampering in the calculation process or the result, no valid proof can be generated, and the tampering will be discovered by the verifier. The STARK technology can protect the integrity of the calculation process in an uncontrolled computing environment. The data processing device may be implemented using different STARK libraries 430 and different STARK parameters.

As shown in FIG. 1, the computing power processing device 200 includes a second receiving module 210, a second acquisition module 220, a third processing module 230, and a third sending module 240. The second receiving module 210 is configured for receiving the prover sent by the data application device 100, to facilitate subsequent data processing using the prover. The second acquisition module 220 is configured for acquiring, from the data source device 300, the ciphertext data obtained using the homomorphic encryption algorithm. The acquisition of encrypted data can protect data privacy. The third processing module 230 is configured for performing calculation on the ciphertext data through the prover to obtain the proof information and the ciphertext result. In this way, computational integrity and data integrity can be verified according to the proof information and the ciphertext result. The third sending module 240 is configured for sending the proof information and the ciphertext result to the data application device 100, such that the data application device 100 obtains a plaintext result according to the proof information and the ciphertext result. The computing power processing device 200 can perform computing power calculation and feed back a calculation result to the data application device 100. Because the prover is deployed in the data application device 100, the data application device 100 can verify computational integrity of the processing procedure of the computing power processing device 200, thereby improving information security.

In another embodiment, the homomorphic encryption algorithm is an encryption algorithm that satisfies the property of homomorphic operation on ciphertext, i.e., after the data is homomorphically encrypted, a result obtained by performing specific calculation on the ciphertext (where the result is also in the form of ciphertext and needs to be decrypted) is the same as a result obtained by performing the same calculation on plaintext. In this way, the data is "computable but invisible", such that calculation processing can be performed on the data while effectively protecting data privacy.

In an embodiment, the second receiving module 210 is connected to the first sending module 130, the second acquisition module 220 is connected to the data source device 300, and the third processing module 230 is respectively connected to the second receiving module 210, the second acquisition module 220, and the third sending module 240. The second receiving module 210 is a module for receiving an algorithmic program sent by the data application device 100. The second acquisition module 220 is an interaction module for acquiring data from a data source. The third processing module 230 is an algorithmic program invocation module for processing the acquired data using the received algorithmic program. The third sending module 240 is an interaction module for sending a calculation result to the data application device 100.

In an embodiment, the computing power processing device 200 may be a cloud computing platform, a computing power network, or other distributed computing platforms that can realize algorithm outsourcing, which will not be described in detail herein.

As shown in FIG. 1, the data source device 300 includes a data encryption module 320, a fourth sending module 330, a third receiving module 340, a data decryption module 350, and a fifth sending module 360. The data encryption module 320 is configured for encrypting the plaintext data of the application service using the homomorphic encryption algorithm to obtain the ciphertext data. The fourth sending module 330 is configured for sending the ciphertext data to the computing power processing device 200, such that the computing power processing device 200 performs calculation on the ciphertext data using the prover to obtain the proof information and the ciphertext result, and sends the proof information and the ciphertext result to the data application device 100. Because the ciphertext data is provided to the computing power processing device 200, data privacy can be ensured. The third receiving module 340 is configured for receiving a decryption request sent by the data application device 100, where the decryption request indicates that the proof information passes a verification by the verifier deployed on the data application device 100 and carries the ciphertext result. The data decryption module 350 is configured for decrypting the ciphertext result using the homomorphic encryption algorithm to obtain the plaintext result. The fifth sending module 360 is configured for sending the plaintext result to the data application device 100, such that the data source device 300 interacts with the data application device 100. In this way, data integrity is ensured and the security of information interaction is improved. The data source device 300 can provide the ciphertext data through encryption to ensure data privacy, and can also decrypt the data to determine whether the data has been tampered with, to ensure data integrity.

In an embodiment, the encryption and decryption operations are performed on the data using the homomorphic encryption algorithm, or may be implemented using different homomorphic encryption algorithms and algorithm parameters, different metadata designs, different verification and authentication methods, and different buffer designs may be used, which will not be described in detail herein.

As shown in FIG. 1, in an embodiment, the data source device 300 further includes a data management module 310. The data management module 310 is configured for acquiring data, preprocessing the acquired data, storing the preprocessed data, and exposing a data access interface and a data structure to the outside, to facilitate the acquisition and use of the data by other entities.

In an embodiment, the data management module 310 is connected to the data encryption module 320, the data encryption module 320 is connected to the fourth sending module 330, the fourth sending module 330 is connected to the second acquisition module 220, the third receiving module 340 is respectively connected to the second processing module 160 and the data decryption module 350, and the fifth sending module 360 is respectively connected to the data decryption module 350 and the second processing module 160. The fourth sending module 330 is an interaction module for providing input data to the computing power processing device 200. The third receiving module 340 is an interaction module for receiving the operation result sent by the data application device 100. The fifth sending module 360 is an interaction module for sending a decryption result to the data application device 100. The third receiving module 340 and the fifth sending module 360 implement the interaction between the data source device 300 and the data application device 100.

In an embodiment, the data application device 100, the computing power processing device 200, and the data source device 300 may be independent of one another, or the data application device 100 and the data source device 300 may be integrated to form a device 400 which is independent of the computing power processing device 200. In case of the device 400 integrating the data application device and data source device, the first acquisition module 110 is represented as an upper-layer service logic module 410, the first sending module 130 is represented as an algorithm management module 440, the first processing module 120 is represented as a STARK library 430, the information verification module 150 and the second processing module 160 are represented as a result verification module 420, the first receiving module 140, an interaction part of the second processing module 160, the fourth sending module 330, the third receiving module 340, and the fifth sending module 360 are represented as a first interaction module 480, the data encryption module 320 and the decryption module 350 are represented as a homomorphic encryption library 460, the data management module 310 is represented as a database 470 and a data acquisition and processing module 450, the second receiving module 210 and the third processing module 230 are represented as a computing management module 250, the second acquisition module 220 is represented as a data acquisition management module 260, and the third sending module 240 is represented as a second interaction module 270.

As shown in FIG. 2, in the device 400 integrating the data application device and the data source device, the upper-layer service logic module 410 is connected to the result verification module 420, the result verification module 420 is connected to the STARK library 430, the STARK library 430 is connected to the algorithm management module 440, the database 470 is connected to the homomorphic encryption library 460, the homomorphic encryption library 460 is connected to the data acquisition and processing module 450, the algorithm management module 440 is connected to the first interaction module 480, and the first interaction module 480 is respectively connected to the result verification module 420 and the data acquisition and processing module 450. In the computing power processing device 200, the computing management module 250, the data acquisition management module 260, and the second interaction module 270 are connected to each other. The deployment of the data application device 100 and the data source device 300 in the same hardware device to interact with the data processing device 200 can also ensure computational integrity and data integrity while achieving high resource utilization and scalability.

The apparatus and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the emergence of new application scenarios, the technical schemes provided in the embodiments of the present disclosure are also applicable to similar technical problems.

Those having ordinary skills in the art may understand that the data processing devices shown in FIG. 1 and FIG. 2 do not constitute a limitation to the embodiments of the present disclosure, and more or fewer components than those shown in the figure may be included, or some components may be combined, or a different component arrangement may be used.

Various embodiments of the data processing method of the present disclosure are described below based on the above data processing device.

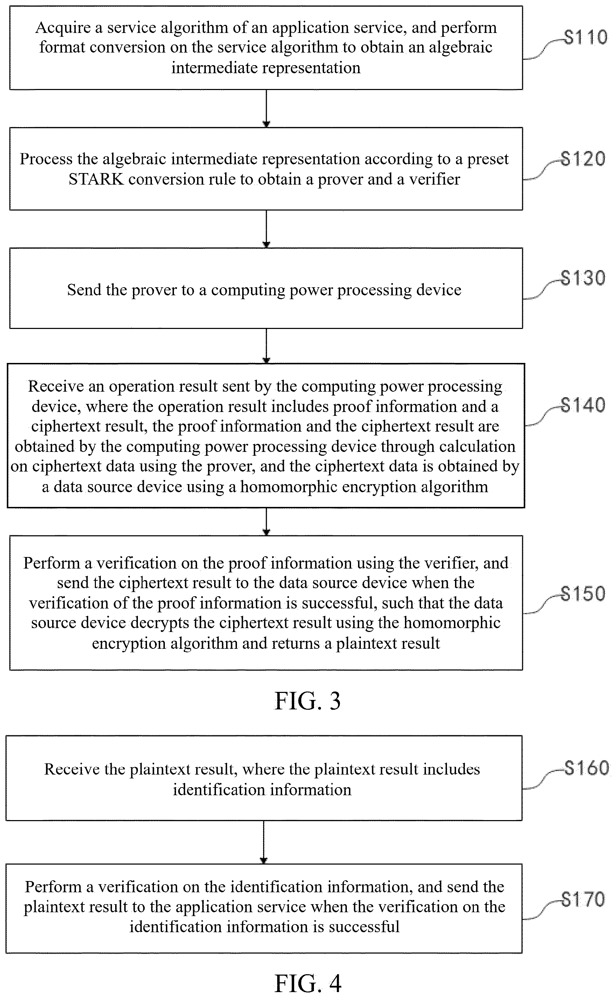

FIG. 3 is a schematic flowchart of a data processing method according to an embodiment of the present disclosure. The data processing method is applied to a data source device. The data processing method includes, but not limited to, the following steps S110, S120, S130, S140, and S150.

At S110, a service algorithm of an application service is acquired, and format conversion is performed on the service algorithm to obtain an algebraic intermediate representation.

In an embodiment, when an application service requirement is updated or an application service appears for the first time, a service algorithm that meets the application service requirement is designed according to the application service requirement, and the service algorithm is arithmetized to obtain an algebraic intermediate representation. Arithmetization is a proof method, which can transform computational steps and an output result format of the service algorithm, to facilitate the subsequent generation of a prover and a verifier using the algebraic intermediate representation.

At S120, the algebraic intermediate representation is processed according to a preset STARK conversion rule to obtain a prover and a verifier.

In an embodiment, the algebraic intermediate representation is processed using techniques such as polynomial constraints and interactive oracle proofs in a STARK library, to convert a series of computational steps into a probabilistically verifiable proof. The mechanism used by STARK mathematically ensures that an attempt to falsify a valid proof will be detected with a very high probability. The use of STARK to generate the prover and the verifier can ensure computational integrity and data integrity.

At S130, the prover is sent to the computing power processing device.

In an embodiment, after the prover is generated according to S120, the prover is sent to the computing power processing device, such that the computing power processing device deploys the prover and returns a calculation result to the data application device. In addition, the verifier is deployed on the data application device, to facilitate subsequent verification of the returned calculation result.

At S140, an operation result sent by the computing power processing device is received, where the operation result includes proof information and a ciphertext result, the proof information and the ciphertext result are obtained by the computing power processing device through calculation on ciphertext data using the prover, and the ciphertext data is obtained by a data source device using a homomorphic encryption algorithm.

In an embodiment, after the prover is sent to the computing power processing device in S130, an operation result obtained by the computing power processing device through calculation on ciphertext data using the prover is received from the computing power processing device. The operation result includes proof information and a ciphertext result. The obtaining of the proof information and the ciphertext result facilitates subsequent verification of the proof information and the ciphertext result, thereby ensuring computational integrity and data integrity.

At S150, a verification is performed on the proof information using the verifier, and the ciphertext result is sent to the data source device when the verification of the proof information is successful, such that the data source device decrypts the ciphertext result using the homomorphic encryption algorithm and returns a plaintext result.

In an embodiment, because proof information can be obtained through calculation using the prover, a validity verification is performed on the proof information using the verifier deployed on the data application device to determine whether the proof information is valid, and when the validity verification of the proof information is successful, the ciphertext result is sent to the data source device, such that the data source device decrypts the ciphertext result using the homomorphic encryption algorithm and returns a plaintext result. The verification of the proof information and the ciphertext result can ensure computational integrity and data integrity.

In an embodiment, a verification is performed on the proof information using the verifier, and when the validity verification of the proof information is unsuccessful, i.e., the proof information does not pass the verification, indicating that the integrity of the calculation process may have been destroyed and the operation result is not credible, first accountability information is sent to the computing power processing device and the operation procedure is ended, where the first accountability information indicates that the service algorithm has been tampered with. When the verification is unsuccessful, the operation procedure is ended to avoid security issues.

In an embodiment, the validity of the proof information may be verified, or a check may be performed on the proof information to verify the proof information, as long as it can be determined whether the calculation process of the prover has been tampered with.

As shown in FIG. 4, after sending the ciphertext result to the data source device, such that the data source device decrypts the ciphertext result using the homomorphic encryption algorithm and returns a plaintext result, the data processing method further includes, but not limited to, the following steps S160 and S170.

At S160, the plaintext result is received, where the plaintext result includes identification information.

In some embodiments, when the verification of the proof information is successful and the data source device successfully decrypts the ciphertext result using the homomorphic encryption algorithm, a plaintext result corresponding to the ciphertext result can be returned. Because the data acquired by the computing power processing device has been encrypted by the data source device, the computing power processing device cannot perform accurate data tampering actions, but may perform a replay attack, i.e., use previously received ciphertext data as an input of the prover to replace the currently received ciphertext data. To avoid such attacks, the data source device adds some identification information to the raw plaintext data. In some embodiments, a generation timestamp of each piece of data is added before the data, such that even if two pieces of data include the same data content, ciphertext corresponding to the two pieces of data will be different after adding metadata. When the data application device receives the plaintext result, the metadata is extracted from the data and used as part of the final calculation result. The plaintext result sent by the data source device is received. The plaintext result includes identification information. The identification information is an agreed public metadata timestamp, or may be a salt. The acquisition of the identification information facilitates the subsequent verification of the identification information, to prevent the data processing party from performing replay cheating.

At S170, a verification is performed on the identification information, and the plaintext result is sent to the application service when the verification on the identification information is successful.

In an embodiment, after the identification information of the plaintext result is received according to S160, it is verified according to the metadata whether the computing power processing device performs a replay attack. If the verification of the identification information is successful, it indicates that the computing power processing device has not tampered with the data. In this case, the plaintext result is sent to the application service, thereby ensuring data integrity.

In an embodiment, if the verification of the identification information is unsuccessful, it indicates that the computing power processing device has tampered with the data and the calculation result is not credible. In this case, second accountability information is sent to the computing power processing device, and the operation procedure is ended, where the second accountability information indicates that the ciphertext data has been tampered with. When the verification is unsuccessful, the operation procedure is ended to avoid security issues.

In an embodiment, after the ciphertext result is sent to the data source device, if information indicating that the decryption of the ciphertext result is unsuccessful is received from the data source device, it indicates that the ciphertext data may have been tampered with. In this case, the second accountability information is sent to the computing power processing device, and then the operation procedure is ended. When the decryption is unsuccessful, the operation procedure is ended to avoid security issues.

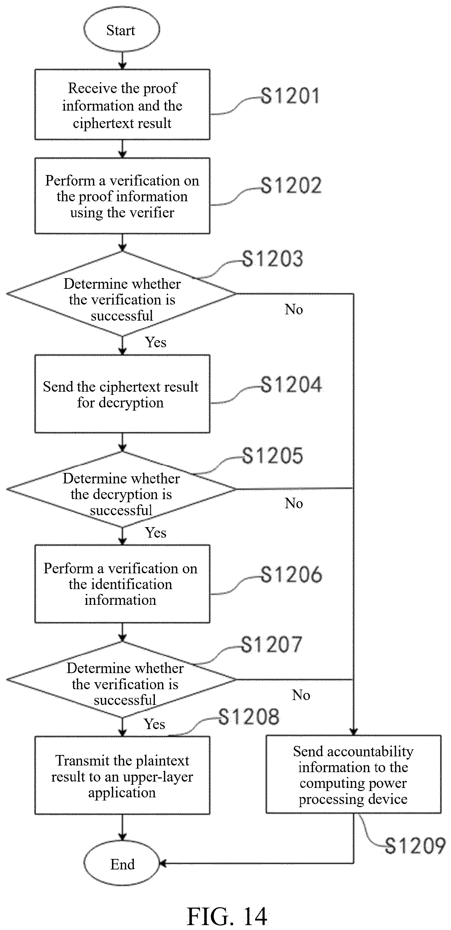

As shown in FIG. 14, S1201 is executed to receive the proof information and the ciphertext result sent by the computing power processing device; then S1202 is executed to perform a verification on the proof information using the verifier; then S1203 is executed to determine whether the verification of the proof information is successful; when the verification of the proof information is successful, S1204 is executed to send the ciphertext result to the data source device, such that the data source device decrypts the ciphertext result and returns the plaintext result; S1205 is executed to determine whether the decryption is successful; if the decryption is successful, S1206 is executed to perform a verification on the identification information included in the plaintext result; S1207 is executed to determine whether the verification of the identification information is successful; and if the verification of the identification information is successful, S1208 is executed to send the plaintext result to an upper-layer application. When the verification of the proof information is unsuccessful, the decryption is unsuccessful, or the verification of the identification information is unsuccessful, S1209 is executed to hold the computing power processing device accountable and end the procedure.

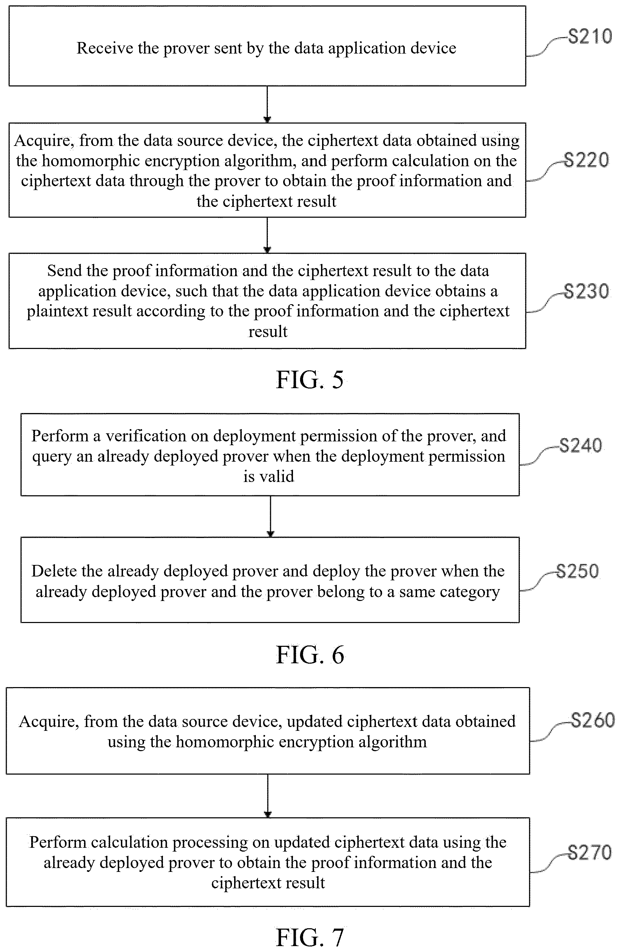

FIG. 5 is a schematic flowchart of a data processing method according to another embodiment of the present disclosure. The data processing method further includes, but not limited to, the following steps S210, S220, and S230.

At S210, the prover sent by the data application device is received.

In an embodiment, after the prover is sent to the computing power processing device in S130, the prover sent by the data application device is received and saved, to realize information interaction between the data application device and the computing power processing device.

As shown in FIG. 6, before acquiring, from a data source device, ciphertext data obtained using a homomorphic encryption algorithm, and performing calculation on the ciphertext data through the prover to obtain proof information and a ciphertext result, the data processing method further includes, but not limited to, the following steps S240 and S250.

At S240, a verification is performed on deployment permission of the prover, and an already deployed prover is queried when the deployment permission is valid.

In an embodiment, the prover received in S210 carries the deployment permission, a verification is performed on the deployment permission, mainly to determine whether the prover sent by the data application device has the deployment permission, and when the deployment permission is valid, an already deployed prover is queried. The subsequent deployment procedure is determined by querying the already deployed prover to determine whether a prover of the same type has been deployed.

At S250, the already deployed prover is deleted and the prover is deployed when the already deployed prover and the prover belong to a same category.

In an embodiment, when there is an already deployed prover belonging to the same category as the prover, the already deployed prover is deleted and cleared, and the prover is deployed. In this way, the already deployed prover can be updated, to better meet the application service requirement. Deploying the prover means loading and executing the received prover.

In an embodiment, when it is determined through the verification of the deployment permission of the prover that the deployment permission is not granted, deployment of the prover is rejected and the operation procedure is ended.

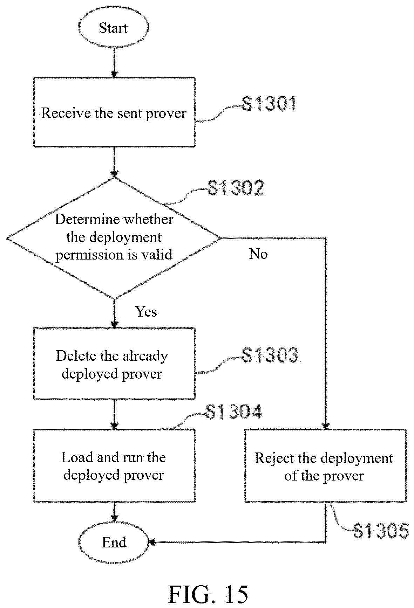

As shown in FIG. 15, S1301 is executed to receive the prover sent by the data application device; then S1302 is executed to determine whether the deployment permission is valid; if the deployment permission is valid, S1303 is executed to delete the already deployed prover; S1304 is executed to load and run the received prover; and if the deployment permission is invalid, S1305 is executed to reject the deployment of the prover.

At S220, the ciphertext data obtained using the homomorphic encryption algorithm is acquired from the data source device, and calculation is performed on the ciphertext data through the prover to obtain the proof information and the ciphertext result.

In an embodiment, because the data source device may update the data, the ciphertext data acquired in this operation may be updated data or include updated data, which has no impact on the prover received from the data application device. The data acquired from the data source device may be ciphertext data or plaintext data. Calculation is then performed on the ciphertext data using the deployed prover. When the acquired data is ciphertext data, the obtained result includes proof information and a ciphertext result. When the acquired data is plaintext data, the obtained result is a plaintext result. In the embodiment of the present disclosure, the acquired data is ciphertext data, so that viewing of the data can be reduced during information interaction, to protect data privacy.

As shown in FIG. 7, when the prover sent by the data application device is not received and new data from the data source device is detected, the data processing method further includes, but not limited to, the following steps S260 and S270.

At S260, updated ciphertext data obtained using the homomorphic encryption algorithm is acquired from the data source device.

In an embodiment, when there is no change in the prover and the entire system is running stably, the computing power processing device continuously interacts with the data source device, and acquires, from the data source device, the updated ciphertext data obtained using the homomorphic encryption algorithm, to ensure stable running of the computing power processing device. Alternatively, when no new data from the data source device is detected, the computing power processing device continuously interacts with the data source device, and acquires, from the data source device, the ciphertext data obtained using the homomorphic encryption algorithm, to facilitate subsequent calculation processing of the ciphertext data, thus completing a processing task transferred from the data application device.

At S270, calculation processing is performed on updated ciphertext data using the already deployed prover to obtain the proof information and the ciphertext result.

In an embodiment, when the prover sent by the data application device is not received, calculation processing is performed on the acquired updated ciphertext data or the acquired non-updated ciphertext data using the already deployed prover to obtain the proof information and the ciphertext result. Regardless of whether the prover sent by the data application device is received or not, the computing power processing device can interact with the data source device, thereby ensuring the stable running of the system.

At S230, the proof information and the ciphertext result are sent to the data application device, such that the data application device obtains a plaintext result according to the proof information and the ciphertext result.

In some embodiments, the proof information and the ciphertext result obtained in S220 and S270 are sent to the data application device, to complete the interaction between the data application device and the computing power processing device, and the data application device performs a verification on the proof information and the ciphertext result and obtains a plaintext result, to determine whether the computing power processing device has tampered with the input data, thereby ensuring data integrity.

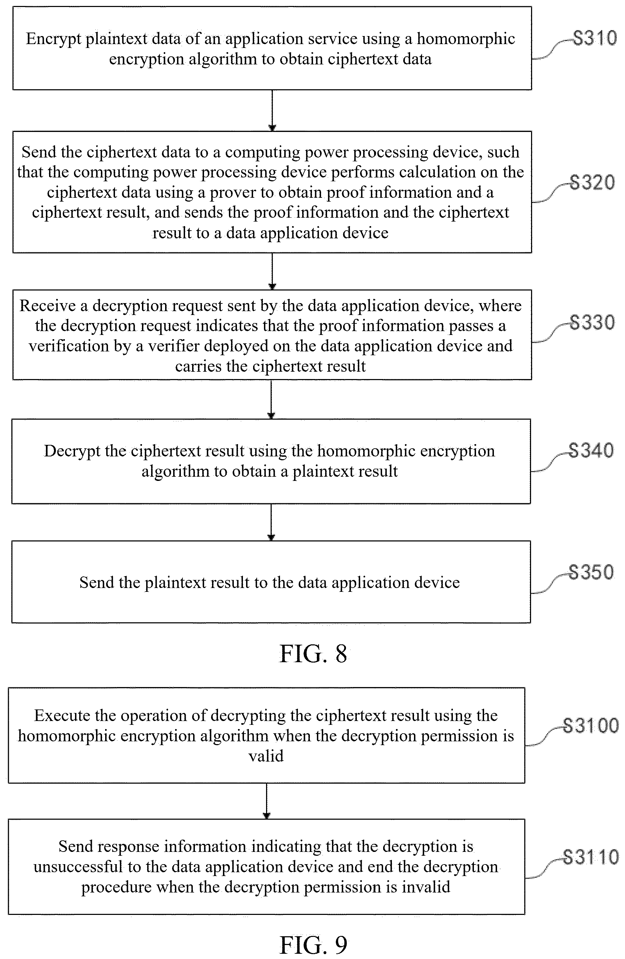

FIG. 8 is a schematic flowchart of a data processing method according to another embodiment of the present disclosure. The data processing method further includes, but not limited to, the following steps S310, S320, S330, S340, and S350.

At S310, plaintext data of an application service is encrypted using a homomorphic encryption algorithm to obtain ciphertext data.

In an embodiment, the plaintext data of the application service may be encrypted using the homomorphic encryption algorithm, or may be encrypted using different parameters of the homomorphic encryption algorithm to obtain ciphertext data. Through the encryption of the plaintext data into the ciphertext data, devices interacting with the data source device cannot view the data content, thereby protecting data privacy.

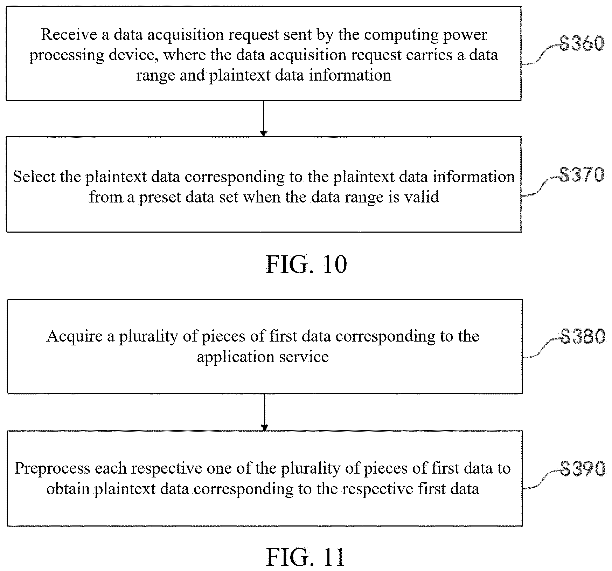

As shown in FIG. 10, before encrypting plaintext data of an application service using a homomorphic encryption algorithm to obtain ciphertext data, the data processing method further includes, but not limited to, the following steps S360 and S370.

At S360, a data acquisition request sent by the computing power processing device is received, where the data acquisition request carries a data range and plaintext data information.

At S370, the plaintext data corresponding to the plaintext data information is selected from a preset data set when the data range is valid.

In an embodiment, the computing power processing device sends a data acquisition request to the data source device, and the data source device receives the data acquisition request sent by the computing power processing device. The data acquisition request carries a data range and plaintext data information. The data range indicates whether the requester, i.e., the computing power processing device, has permission to acquire these data, or whether data in the carried data range exists in the preset data set. First, a verification is performed on the data range carried. When the data range is valid, the plaintext data corresponding to the plaintext data information is selected from the preset data set. By determining whether the data range is valid, it can be ensured that the data corresponding to the acquisition request is acquired.

As shown in FIG. 11, the preset data set is obtained by executing the following steps S380 and S390.

At S380, a plurality of pieces of first data corresponding to the application service are acquired.

In an embodiment, data corresponding to different application services are acquired from real life using a preset tool. In an embodiment, if image data needs to be acquired, a camera or mobile phone may be used. A plurality of pieces of first data corresponding to the application service can be acquired through data acquisition, to facilitate subsequent preprocessing of the first data. The first data is raw unprocessed data acquired using a tool.

At S390, each respective one of the plurality of pieces of first data is preprocessed to obtain plaintext data corresponding to the respective first data.

As shown in FIG. 12, preprocessing each respective one of the plurality of pieces of first data to obtain plaintext data corresponding to the respective first data includes, but not limited to, the following steps S391, S392, and S393.

At S391, data cleaning is performed on each respective one of the plurality of pieces of first data to obtain second data corresponding to the respective first data.

In some embodiments, each respective acquired unprocessed first data is processed by removing null values, duplicate values, invalid values, etc., to obtain second data corresponding to the respective first data. Some invalid data can be removed by cleaning the first data, to save storage resources. The second data is data obtained by cleaning the first data.

At S392, format conversion of the second data is performed to obtain third data corresponding to the second data.

In some embodiments, the format of the second data obtained through cleaning in S391 is converted according to a preset data structure. The preset data structure may be in the form of an array or a binary tree, as long as a storage standard is satisfied, which will not be described in detail herein. The third data corresponding to each piece of second data is obtained through the format conversion. The format conversion can facilitate the storage and reading of the data. The third data is data obtained through cleaning and format conversion of the acquired data.

At S393, identification information is added to the third data to obtain the plaintext data.

In some embodiments, identification information is added to the third data obtained through conversion in S392 to obtain the plaintext data. The identification information is metadata, which may be a timestamp or a salt. The plaintext data constitutes a data set. Each piece of data in the data set is stored in a database, and a data access interface and a data structure of the database are exposed to the outside, to facilitate acquisition and use of the data by other entities. The database may be a Mysql database or a Mongodb database, as long as it can store data.

In some embodiments, before the plaintext data of the application service is encrypted using the homomorphic encryption algorithm to obtain ciphertext data, it is determined whether there is a ciphertext buffer in the data source device. If there is a ciphertext buffer in the data source device, it is determined whether a ciphertext within the data range is present in the ciphertext buffer. When a ciphertext within the data range is present in the ciphertext buffer, the ciphertext in the ciphertext buffer is selected as the ciphertext data. When no ciphertext within the data range is present in the ciphertext buffer, the plaintext data of the application service is encrypted using the homomorphic encryption algorithm to obtain ciphertext data, and the ciphertext data is stored in the ciphertext buffer. If there is no ciphertext buffer in the data source device, plaintext data in the database is directly encrypted using the homomorphic encryption algorithm to obtain ciphertext data. The setting of the ciphertext buffer can accelerate the acquisition of ciphertext data, thereby saving time.

At S320, the ciphertext data is sent to a computing power processing device, such that the computing power processing device performs calculation on the ciphertext data using a prover to obtain proof information and a ciphertext result, and sends the proof information and the ciphertext result to a data application device.

In some embodiments, after the ciphertext data is obtained in S310, the ciphertext data is sent to the data requester, i.e., the computing power processing device, such that the computing power processing device performs calculation on the ciphertext data using a prover to obtain proof information and a ciphertext result, and sends the proof information and the ciphertext result to a data application device. The sending of data in the form ciphertext data can prevent data acquisition parties from viewing the data content, thereby protecting data privacy.

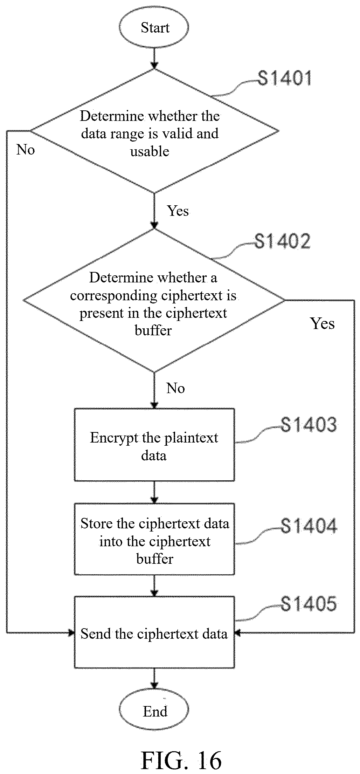

As shown in FIG. 16, when receiving, from the computing power processing device, a data acquisition request carrying a data range and plaintext data information, S1401 is executed to determine whether the data range is valid and usable. If the data range is valid and usable, S1402 is executed to determine whether a corresponding ciphertext is present in the ciphertext buffer. If a ciphertext within the data range is present in the ciphertext buffer, S1405 is executed to send the ciphertext data to the computing power processing device. If no ciphertext within the data range is present in the ciphertext buffer, S1403 is executed to encrypt the plaintext data to obtain ciphertext data. Then, S1404 is executed to store the ciphertext data into the ciphertext buffer. Finally, S1405 is executed to send the ciphertext data to the computing power processing device. If the data range is invalid, the operation procedure is ended. By transmitting ciphertext data to the object initiating the data acquisition request, data privacy can be ensured.

At S330, a decryption request sent by the data application device is received, where the decryption request indicates that the proof information passes a verification by a verifier deployed on the data application device and carries the ciphertext result.

In some embodiments, a decryption request sent by the data application device is received, such that information interaction between the data source device and the data application device can be realized. The decryption request indicates that the proof information passes a verification by a verifier deployed on the data application device and carries the ciphertext result, which facilitates subsequent decryption of the ciphertext result.

At S340, the ciphertext result is decrypted using the homomorphic encryption algorithm to obtain a plaintext result.

In some embodiments, the ciphertext result is decrypted using the homomorphic encryption algorithm, or the ciphertext data of the application service may be decrypted using different parameters of the homomorphic encryption algorithm, to obtain a plaintext result. When the plaintext result is obtained, it indicates that the decryption is successful, and subsequently the plaintext result can be sent to the data application device for processing.

In an embodiment, the decryption request further carries decryption permission. As shown in FIG. 9, before decrypting the ciphertext result using the homomorphic encryption algorithm to obtain a plaintext result, the data processing method further includes, but not limited to, the following steps S3100 and S3110.

At S3100, the operation of decrypting the ciphertext result using the homomorphic encryption algorithm is executed when the decryption permission is valid.

At S3110, response information indicating that the decryption is unsuccessful is sent to the data application device and the decryption procedure is ended when the decryption permission is invalid.

In an embodiment, it is determined whether the carried decryption permission is valid. If the decryption permission is valid, the ciphertext result is decrypted using the homomorphic encryption algorithm. When the decryption is successful, it indicates that the input ciphertext data corresponding to the ciphertext result is from the data source device itself, the data has not been tampered with, and a plaintext result is obtained. In this way, data integrity is ensured. If the decryption permission is invalid, response information indicating that the decryption is unsuccessful is sent to the data application device and the decryption procedure is ended. The operation of determining whether the decryption permission is valid ensures the security of the decryption process.

In an embodiment, the ciphertext result is decrypted using the homomorphic encryption algorithm, and when the decryption of the ciphertext result is unsuccessful, it indicates that the input ciphertext data corresponding to the ciphertext result is not from the data source device itself, and response information indicating that the decryption is unsuccessful is sent to the data application device. According to the response information indicating that the decryption is unsuccessful, the data application device determines that the input data of the computing power processing device has been tampered with and holds the computing power processing device accountable, thereby ensuring the security of the processing procedure.

At S350, the plaintext result is sent to the data application device.

In an embodiment, after the plaintext result is successfully obtained through decryption in S340, the plaintext result is sent to the data application device, such that the data application device can perform a verification on the plaintext result, and if the verification of the plaintext result is successful, transmits the plaintext result to an upper-layer application for use.

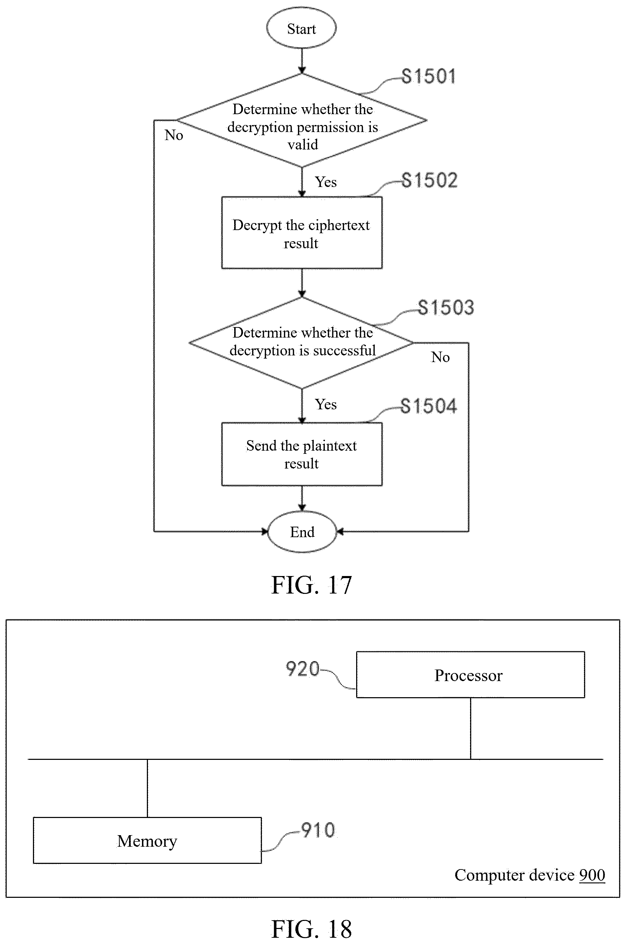

As shown in FIG. 17, after receiving, from the data application device, a decryption request carrying a ciphertext result and decryption permission and indicating that the proof information passes a verification by a verifier deployed on the data application device, S1501 is first executed to determine whether the decryption permission is valid. If the decryption permission is valid, S1502 is executed to decrypt the ciphertext result. Then, S1503 is executed to determine whether the decryption is successful. If the decryption is successful, S1504 is executed to send the plaintext result to the data application device. When the decryption is unsuccessful or the decryption permission is invalid, the operation procedure is ended.

In an embodiment, in a case where the embodiment of the data processing method is applied when the data application device, the computing power processing device, and the data source device are independent of one another, the data processing method is also applicable to cases where the data application device and the data source device are integrated and the computing power processing device is independent. To avoid repetition, the details will not be repeated here.

FIG. 18 shows a computer device 900 according to an embodiment of the present disclosure. The computer device 900 may be a server or a terminal device. The internal structure of the computer device 900 includes, but not limited to:
a memory 910, configured for storing a program; and
a processor 920, configured for executing the program stored in the memory 910, where the program stored in the memory 910, when executed by the processor 920, causes the processor 920 to implement the data processing method described above.

The processor 920 and the memory 910 may be connected by a bus or in other ways.

The memory 910, as a non-transitory computer-readable storage medium, may be configured for storing a non-transitory software program and a non-transitory computer-executable program, for example, the data processing method described in any one of the embodiments of the present disclosure. The processor 920 runs the non-transitory software program and the non-transitory computer-executable program stored in the memory 910, to implement the data processing method.

The memory 910 may include a program storage area and a data storage area. The program storage area may store an operating system, and an application required by at least one function. The data storage area may store data and the like required for executing the data processing method. In addition, the memory 910 may include a high-speed random access memory, and may also include a non-transitory memory, e.g., at least one magnetic disk storage device, flash memory device, or other non-transitory solid-state storage device. In some implementations, the memory 910 may include memories located remotely from the processor 920, and the remote memories may be connected to the processor 920 via a network. Examples of the network include, but are not limited to, the Internet, an intranet, a local area network, a mobile communication network, and combinations thereof.

The non-transitory software program and instruction required to implement the data processing method are stored in the memory 910 which, when executed by one or more processors 920, cause the one or more processors 920 to implement the data processing method according to any one of the embodiments of the present disclosure.

An embodiment of the present disclosure provides a computer-readable storage medium, storing a computer-executable instruction which, when executed by a processor, causes the processor to implement the data processing method.

In an embodiment, the storage medium stores a computer-executable instruction which, when executed by one or more control processors 920, for example, by the processor 920 in the computer device 900, may cause the one or more processors 920 to implement the data processing method according to any one of the embodiments of the present disclosure.

An embodiment of the present disclosure includes: acquiring a service algorithm of an application service, and performing format conversion on the service algorithm to obtain an algebraic intermediate representation; afterward, processing the algebraic intermediate representation according to a preset STARK conversion rule to obtain a prover and a verifier; then, sending the prover to a computing power processing device; receiving an operation result sent by the computing power processing device, where the operation result includes proof information and a ciphertext result, the proof information and the ciphertext result are obtained by the computing power processing device through calculation on ciphertext data using the prover, and the ciphertext data is obtained by a data source device using a homomorphic encryption algorithm; and finally, performing a verification on the proof information using the verifier, and sending the ciphertext result to the data source device when the verification of the proof information is successful, such that the data source device decrypts the ciphertext result using the homomorphic encryption algorithm and returns a plaintext result. According to the schemes provided in the embodiments of the present disclosure, a data application device acquires a service algorithm of an application service, and performs format conversion on the service algorithm to obtain an algebraic intermediate representation. After performing conversion processing on the service algorithm, the data application device processes the algebraic intermediate representation according to a preset STARK conversion rule to obtain a prover and a verifier. The data application device sends the prover to a computing power processing device, to facilitate the deployment of the prover by the computing power processing device. The data application device receives an operation result sent by the computing power processing device, where the operation result includes proof information and a ciphertext result, the proof information and the ciphertext result are obtained by the computing power processing device through calculation on ciphertext data using the prover, and the ciphertext data is obtained by a data source device using a homomorphic encryption algorithm. In this way, the ciphertext result can be received, thereby ensuring data privacy. Because the verifier is deployed on the data application device, the deployed verifier can be used to perform a verification on the proof information to determine whether the operation result sent by the computing power processing device has been tampered with. If the verification of the proof information is successful, it indicates that the algorithm operations have not been tampered with at the time of calculation, such that computational integrity is ensured. The data application device sends the ciphertext result to the data source device, such that the data source device decrypts the ciphertext result using the homomorphic encryption algorithm and returns a plaintext result. This ensures data integrity and facilitates the subsequent use of the plaintext result. The present disclosure can ensure computational integrity and data integrity while achieving high resource utilization and scalability.

The embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A data processing method, applied to a data application device, the method comprising:
acquiring a service algorithm of an application service, and performing format conversion on the service algorithm to obtain an algebraic intermediate representation;
processing the algebraic intermediate representation according to a preset Scalable Transparent ARgument of Knowledge (STARK) conversion rule to obtain a prover and a verifier;
sending the prover to a computing power processing device;
receiving an operation result sent by the computing power processing device, wherein the operation result comprises proof information and a ciphertext result, the proof information and the ciphertext result are obtained by the computing power processing device through calculation on ciphertext data using the prover, and the ciphertext data is obtained by a data source device using a homomorphic encryption algorithm; and
performing a verification on the proof information using the verifier, and sending the ciphertext result to the data source device in response to the verification of the proof information being successful, such that the data source device decrypts the ciphertext result using the homomorphic encryption algorithm and returns a plaintext result.

2. The method of claim 1, wherein after performing a verification on the proof information using the verifier, the method further comprises: sending first accountability information to the computing power processing device and ending the operation procedure, in response to the verification of the proof information being unsuccessful, wherein the first accountability information indicates that the service algorithm has been tampered with.

3. The method of claim 1, wherein after sending the ciphertext result to the data source device, such that the data source device decrypts the ciphertext result using the homomorphic encryption algorithm and returns a plaintext result, the method further comprises:
receiving the plaintext result, wherein the plaintext result comprises identification information; and
performing a verification on the identification information, and sending the plaintext result to the application service in response to the verification on the identification information being successful.

4. The method of claim 3, wherein after performing a verification on the identification information, the method further comprises: sending second accountability information to the computing power processing device and ending the operation procedure, in response to the verification of the identification information being unsuccessful, wherein the second accountability information indicates that the ciphertext data has been tampered with.

5. The method of claim 4, wherein after sending the ciphertext result to the data source device, the method further comprises: sending the second accountability information to the computing power processing device and ending the operation procedure, in response to the decryption of the ciphertext result being unsuccessful.

6. A data processing method, applied to a computing power processing device, the method comprising:
receiving a prover sent by a data application device;
acquiring, from a data source device, ciphertext data obtained using a homomorphic encryption algorithm, and performing calculation on the ciphertext data through the prover to obtain proof information and a ciphertext result; and
sending the proof information and the ciphertext result to the data application device, such that the data application device obtains a plaintext result according to the proof information and the ciphertext result.

7. The method of claim 6, wherein before acquiring, from a data source device, ciphertext data obtained using a homomorphic encryption algorithm, and performing calculation on the ciphertext data through the prover to obtain proof information and a ciphertext result, the method further comprises:
performing a verification on deployment permission of the prover, and querying an already deployed prover in response to the deployment permission being valid; and
deleting the already deployed prover and deploying the prover, in response to the already deployed prover and the prover belong to a same category.

8. The method of claim 7, wherein after performing a verification on deployment permission of the prover, the method further comprises: rejecting deployment of the prover and ending the operation procedure, in response to the deployment permission being invalid.

9. The method of claim 7, wherein in response to detecting new data from the data source device and not receiving the prover sent by the data application device, the method further comprises:
acquiring, from the data source device, updated ciphertext data obtained using the homomorphic encryption algorithm; and
performing calculation processing on updated ciphertext data using the already deployed prover to obtain the proof information and the ciphertext result.

10. A data processing method, applied to a data source device, the method comprising:
encrypting plaintext data of an application service using a homomorphic encryption algorithm to obtain ciphertext data;
sending the ciphertext data to a computing power processing device, such that the computing power processing device performs calculation on the ciphertext data using a prover to obtain proof information and a ciphertext result, and sends the proof information and the ciphertext result to a data application device;
receiving a decryption request sent by the data application device, wherein the decryption request indicates that the proof information passes a verification by a verifier deployed on the data application device and carries the ciphertext result;
decrypting the ciphertext result using the homomorphic encryption algorithm to obtain a plaintext result; and
sending the plaintext result to the data application device.

11. The method of claim 10, wherein the decryption request further carries decryption permission; and
before decrypting the ciphertext result using the homomorphic encryption algorithm to obtain a plaintext result, the method further comprises:
executing the operation of decrypting the ciphertext result using the homomorphic encryption algorithm, in response to the decryption permission being valid; or
sending response information indicating that the decryption is unsuccessful to the data application device and ending the decryption procedure, in response to the decryption permission being invalid.

12. The method of claim 11, wherein after decrypting the ciphertext result using the homomorphic encryption algorithm, the method further comprises: sending the response information indicating that the decryption is unsuccessful to the data application device, in response to the decryption of the ciphertext result being unsuccessful.

13. The method of claim 10, wherein before encrypting plaintext data of an application service using a homomorphic encryption algorithm to obtain ciphertext data, the method further comprises:
receiving a data acquisition request sent by the computing power processing device, wherein the data acquisition request carries a data range and plaintext data information; and
selecting the plaintext data corresponding to the plaintext data information from a preset data set in response to the data range being valid.

14. The method of claim 13, wherein before encrypting plaintext data of an application service using a homomorphic encryption algorithm to obtain ciphertext data, the method further comprises:
in response to a ciphertext within the data range being present in a ciphertext buffer, selecting the ciphertext in the ciphertext buffer as the ciphertext data.

15. The method of claim 13, wherein the preset data set is obtained by:
acquiring a plurality of pieces of first data corresponding to the application service; and
preprocessing each respective one of the plurality of pieces of first data to obtain plaintext data corresponding to the respective first data.

16. The method of claim 15, wherein preprocessing each respective one of the plurality of pieces of first data to obtain plaintext data corresponding to the respective first data comprises:
performing data cleaning on each respective one of the plurality of pieces of first data to obtain second data corresponding to the respective first data;
performing format conversion of the second data to obtain third data corresponding to the second data; and
adding identification information to the third data to obtain the plaintext data.

17. A data processing device, comprising:
a first acquisition module, configured for acquiring a service algorithm of an application service, and performing format conversion on the service algorithm to obtain an algebraic intermediate representation;
a first processing module, configured for processing the algebraic intermediate representation according to a preset Scalable Transparent ARgument of Knowledge (STARK) conversion rule to obtain a prover and a verifier;
a first sending module, configured for sending the prover to a computing power processing device;
a first receiving module, configured for receiving an operation result sent by the computing power processing device, wherein the operation result comprises proof information and a ciphertext result, the proof information and the ciphertext result are obtained by the computing power processing device through calculation on ciphertext data using the prover, and the ciphertext data is obtained by a data source device using a homomorphic encryption algorithm;
an information verification module, configured for performing a verification on the proof information using the verifier; and
a second processing module, configured for sending the ciphertext result to the data source device in response to the verification of the proof information being successful, such that the data source device decrypts the ciphertext result using the homomorphic encryption algorithm and returns a plaintext result.

18. A data processing device, comprising:
a second receiving module, configured for receiving a prover sent by a data application device;
a second acquisition module, configured for acquiring, from a data source device, ciphertext data obtained using a homomorphic encryption algorithm;
a third processing module, configured for performing calculation on the ciphertext data through the prover to obtain proof information and a ciphertext result; and
a third sending module, configured for sending the proof information and the ciphertext result to the data application device, such that the data application device obtains a plaintext result according to the proof information and the ciphertext result.

19. A data processing device, comprising:
a data encryption module, configured for encrypting plaintext data of an application service using a homomorphic encryption algorithm to obtain ciphertext data;
a fourth sending module, configured for sending the ciphertext data to a computing power processing device, such that the computing power processing device performs calculation on the ciphertext data using a prover to obtain proof information and a ciphertext result, and sends the proof information and the ciphertext result to a data application device;
a third receiving module, configured for receiving a decryption request sent by the data application device, wherein the decryption request indicates that the proof information passes a verification by a verifier deployed on the data application device and carries the ciphertext result;
a data decryption module, configured for decrypting the ciphertext result using the homomorphic encryption algorithm to obtain a plaintext result; and
a fifth sending module, configured for sending the plaintext result to the data application device.

20. A computer device, comprising a memory and a processor, wherein the memory stores computer-readable instructions which, when executed by the processor, cause the processor to perform the steps of the method of any one of claims 1 to 16.

21. A computer-readable storage medium, readable and writable by a processor and storing computer-readable instructions, wherein the computer-readable instructions, when executed by the processor, cause the processor to perform the steps of the method of any one of claims 1 to 16.
